Europäisches Patentamt

European Patent Office

Office européen des brevets

(19)

(11) Numéro de publication : **0 401 111 B1**

(12) ## FASCICULE DE BREVET EUROPEEN

(45) Date de publication du fascicule du brevet :
**24.03.93 Bulletin 93/12**

(51) Int. Cl.$^5$ : **G01F 23/26**

(21) Numéro de dépôt : **90401435.4**

(22) Date de dépôt : **30.05.90**

(54) **Dispositif de mesure de niveau et/ou volume d'un liquide à sonde capacitive.**

(30) Priorité : **31.05.89 FR 8907164**

(43) Date de publication de la demande :
**05.12.90 Bulletin 90/49**

(45) Mention de la délivrance du brevet :
**24.03.93 Bulletin 93/12**

(84) Etats contractants désignés :
**DE ES FR GB IT SE**

(56) Documents cités :
**WO-A-84/03355**
**FR-A- 2 550 337**
**US-A- 2 849 882**
**US-A- 3 781 672**
**US-A- 4 166 388**
**US-A- 4 373 390**

(73) Titulaire : **JAEGER**
**2, rue Baudin**
**F-92303 Levallois-Perret (FR)**

(72) Inventeur : **Regnault, Serge Marcel**
**22 rue Milton**
**F-75009 Paris (FR)**
Inventeur : **Dunon-Bluteau, Francis**
**6, résidence des Lilas**
**F-94550 Chevilly-la Rue (FR)**

(74) Mandataire : **Martin, Jean-Jacques**
**Cabinet REGIMBEAU 26, Avenue Kléber**
**F-75116 Paris (FR)**

EP 0 401 111 B1

Jouve, 18, rue Saint-Denis, 75001 PARIS

EP 0 401 111 B1

## Description

La présente invention concerne un dispositif de mesure de niveau et/ou volume d'un liquide dans un réservoir. La présente invention trouve notamment, mais non exclusivement, application dans la mesure du niveau ou volume de carburant contenu dans un réservoir de véhicule automobile.

La présente invention concerne plus précisément un dispositif de mesure connu en soi, comprenant une sonde capacitive comportant au moins deux armatures principales séparées, parallèles, généralement verticales, destinées à être plongées dans le liquide et un moyen de mesure de capacité électrique, possédant une entrée de détection et une masse, l'entrée de détection étant reliée à une première armature principale tandis que la masse est reliée à la seconde armature principale.

On a déjà proposé divers dispositifs de mesure à sonde capacitive, par exemple dans les documents FR-A-2 234 555, FR-A-2 402 193, FR-A-2 451 024, FR-A-2 500 169 et FR-A-2 500 337.

Le document US-A-2849882 décrit un système capacitif de mesure de niveau de liquide comprenant :
- une source électrique alternative,
- un transformateur dont le primaire est relié à la source électrique et le secondaire comprend une prise médiane,
- une sonde capacitive comprenant une première armature cylindrique, une seconde armature formée d'un secteur de cylindre coaxial à la première armature, une troisième armature formée d'un secteur de cylindre de même rayon que la seconde armature et également coaxiale à la première armature, et une quatrième armature de même rayon que la seconde et la troisième armatures et coaxiale à la première armature, qui entoure la seconde et la troisième armatures à distance ; la seconde et la troisième armatures étant reliées à des extrémités opposées du secondaire, tandis que la quatrième armature est reliée à la masse et à la prise médiane du secondaire,
- un amplificateur relié directement à la première armature et relié par l'intermédiaire d'un condensateur à la troisième armature,
- un servo-moteur commandé par la sortie de l'amplificateur,
- une résistance variable reliée entre la prise médiane du secondaire et la seconde extrémité de celui-ci, le curseur de la résistance variable étant contrôlé par le servo-moteur, et
- un dispositif d'affichage commandé par le servo-moteur.

Le point fondamental décrit dans ce document est le suivant. Les seconde et troisième armatures étant reliées à deux extrémités du secondaire respectivement, donc à des points en opposition de phase, l'utilisation de la troisième armature permet de compenser les pertes électriques entre la deuxième et la quatrième armatures.

Les dispositifs de mesure à sonde capacitive présentent en particulier l'avantage, par rapport aux systèmes classiques à flotteur et réglette résistive, de ne pas posséder de pièces mobiles.

Cependant, malgré cet avantage indéniable, les dispositifs de mesure à sonde capacitive sont peu utilisés de nos jours car ils ne donnent pas entière satisfaction, notamment sur le plan de la précision.

Le but principal de la présente invention est de proposer un nouveau dispositif de mesure à sonde capacitive présentant une précision meilleure que les systèmes antérieurs.

Un but auxiliaire de la présente invention est de proposer un dispositif de mesure à sonde capacitive compatible avec tous les types de carburant, en particulier avec les carburants oxygénés, à teneur élevée en méthanol ou éthanol.

Un autre but auxiliaire de la présente invention est de proposer un dispositif de mesure à sonde capacitive présentant une grande sensibilité, c'est-à-dire une variation importante de la capacité sur toute l'étendue de la mesure.

Selon une caractéristique essentielle de la présente invention, la première armature précitée de la sonde est entourée d'une armature de garde qui est placée au même potentiel que ladite première armature, grâce à un étage de recopie de potentiel intercalé entre l'armature de garde et cette première armature.

Cette armature de garde permet d'éliminer les effets dits "de bord" et d'améliorer ainsi la précision de la mesure.

Selon une caractéristique avantageuse de la présente invention, la sonde capacitive comprend au moins un support en matériau électriquement isolant qui porte une première armature principale, une armature auxiliaire placée en partie inférieure du support en dessous de l'armature principale pour servir de capacité de référence permettant de déterminer la permittivité du liquide, une piste de connexion reliée à l'armature auxiliaire et qui s'étend jusqu'en partie supérieure du support, un élément d'armature secondaire de même géométrie que la piste de connexion et qui s'étend parallèlement à celle-ci, et l'armature de garde qui entoure l'armature principale, qui entoure l'armature auxiliaire et sa piste de connexion associée et qui entoure l'élément d'armature secondaire, la seconde armature étant supportée parallèlement au support par des entretoises en

2

matériau électriquement isolant, et s'étendant en regard de l'armature principale, de l'armature auxiliaire, de sa piste de connexion et de l'armature secondaire, ainsi que des moyens conçus pour soustraire la valeur de capacité déterminée par les éléments d'armature secondaires, de la valeur de capacité déterminée par les éléments d'armature auxiliaires et la piste de connexion associée.

Selon une autre caractéristique avantageuse de la présente invention, le moyen de mesure de capacité comprend un oscillateur chargé par la sonde capacitive, un moyen sensible à la fréquence de l'oscillateur, et des moyens conçus pour charger successivement l'oscillateur par des condensateurs présentant une différence de capacité connue, dans une phase initiale d'étalonnage.

Selon une autre caractéristique avantageuse de la présente invention, la sonde capacitive possède à sa partie inférieure, des éléments d'armatures auxiliaires qui définissent une capacité de référence permettant de déterminer la permittivité du fluide, et il est prévu des moyens conçus pour comparer la permittivité mesurée du fluide avec un seuil, générer une alarme si la permittivité mesurée dépasse le seuil, et réaliser la mesure de niveau et/ou volume sur la base d'une valeur de permittivité prédéfinie si la permittivité mesurée dépasse le seuil.

Ces dispositions permettent de détecter la présence d'eau dans le fond du réservoir, tout en délivrant une information de précision optimum.

Selon une première variante, la valeur de permittivité prédéfinie est mémorisée dans des moyens appropriés lors de la conception du système.

Selon une seconde variante, la valeur de permittivité prédéfinie correspond à la dernière valeur mesurée de la permittivité avant détection du franchissement de seuil.

D'autres caractéristiques, buts et avantages de la présente invention apparaîtront à la lecture de la description détaillée qui va suivre, et en regard des dessins annexés donnés à titre d'exemple et sur lesquels :
- la figure 1 représente une vue schématique latérale d'une sonde capacitive conforme à la présente invention,
- les figures 2 et 3 représentent deux vues schématiques latérales, selon des vues référencées respectivement 2 et 3 sur la figure 1, de deux électrodes composant cette sonde,
- les figures 4 et 5 représentent des vues similaires aux figures 2 et 3 respectivement, d'une autre variante de réalisation d'électrodes conformes à la présente invention,
- la figure 6 illustre schématiquement le phénomène de capillarité du liquide sur l'une des électrodes,
- la figure 7 illustre le même phénomène au niveau d'entretoises prévues entre les électrodes,
- la figure 8 représente le schéma des moyens de mesure de capacité conforme à la présente invention,
- les figures 9 et 10 représentent deux chronogrammes illustrant schématiquement le fonctionnement des moyens de mesure conformes à la présente invention,
- la figure 11 représente, sous forme d'organigramme, le procédé de mesure conforme à la présente invention.
- la figure 12 rerprésente une variante des moyens de mesure de capacité conforme à la présente invention, et
- la figure 13 représente une courbe rapport cyclique d'un signal de commande/déviation d'une aiguille de logomètre.

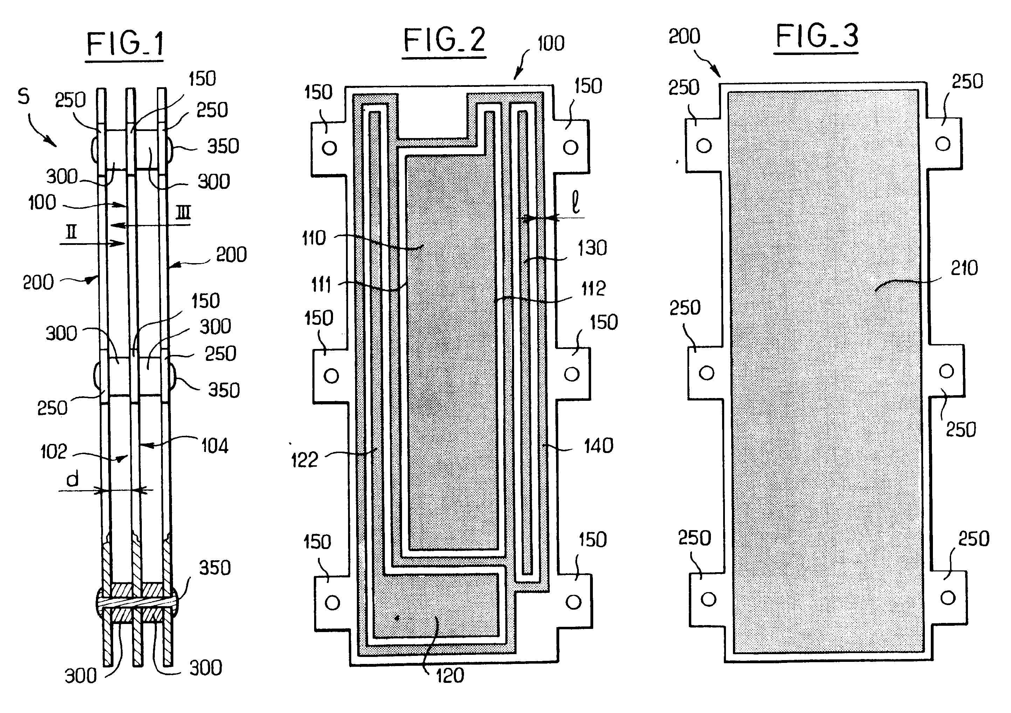

On a représenté sur les figures 1 à 3 annexées une sonde capacitive S conforme à un mode de réalisation préférentiel de la présente invention.

Cette sonde S est constituée d'une électrode centrale plane 100 encadrée par deux électrodes extérieures planes 200. Les électrodes extérieures 200 sont espacées des électrodes centrales 100 par des entretoises 300. L'électrode centrale 100, les electrodes extérieures 200 et les entretoises 300 sont maintenues par des rivets tubulaires 350, traversant les entretoises 300. Les rivets 350 sont formés avantageusement en laiton ou en aluminium. Les électrodes 100 et 200 sont parallèles.

L'électrode centrale 100 est formée d'un corps support plan en matériau électriquement isolant, stratifié, métallisé deux faces. Ce stratifié est avantageusement réalisé soit à base de polyimide soit à base de résine époxy chargé de tissus de fibre de verre. Le corps support 100 porte sur chacune de ses deux faces principales 102, 104, les armatures illustrées sur la figure 2.

Ces armatures sont avantageusement réalisées en cuivre et, par méthode soustractive.

Les stratifiés à base de polyimide ou de résine époxy chargés de fibres de verre présentent une parfaite tenue dimensionnelle et géométrique (vrillage et flèche), ainsi qu'une excellente adhérence du cuivre, après immersion dans tout type de carburant).

Sur chacune des faces 102, 104 de l'électrode 100, sont réalisées par méthode soustractive, une armature principale 110, une armature auxiliaire 120 associée à une piste de connexion 122, une armature secondaire 130 et une armature de garde 140.

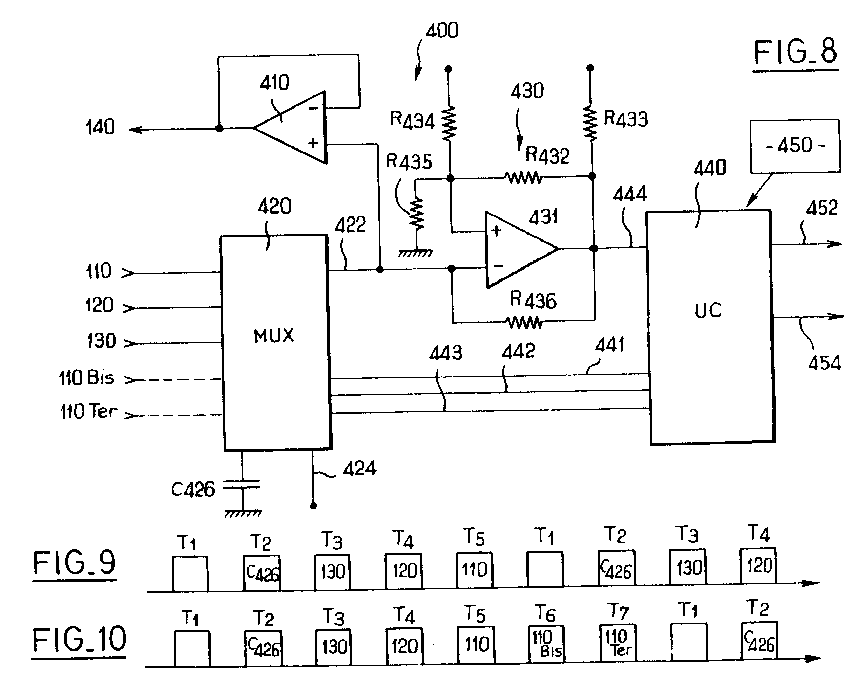

Les liaisons électriques entre les armatures 110, 120, 130, 140 et les moyens de mesure représentés sur la figure 8 , sont assurées en partie supérieure de l'électrode 100.

Les électrodes extérieures 200 peuvent être réalisées sous forme d'un corps support d'un matériau électriquement isolant stratifié, à base de polyimide ou de résine époxy chargé de fibres de verre, métallisé une face, pour définir une seconde armature principale 210, comme représentée sur la figure 3. Cette armature 210 doit s'étendre en regard de la première armature principale 110, de l'armature auxiliaire 120, de la piste de connexion 122, de la piste auxiliaire 130 et de l'armature de garde 140. Le cas échéant, les électrodes 200 peuvent cependant être formées tout simplement d'une feuille unique de fer étamé ou d'acier inoxydable.

Les deux électrodes extérieures 200 sont avantageusement de structure identique. La sonde présente ainsi un plan de symétrie correspondant au plan moyen de l'électrode centrale 100. Cette symétrie permet, à encombrement sensiblement identique, de doubler la valeur capacitive de la sonde, en connectant électriquement respectivement deux à deux les armatures 110, 122, 130, 140 ménagées sur chacune des deux faces principales de l'électrode centrale 100 d'une part, et en reliant entre elles les deux électrodes extérieures 200 d'autre part.

La première armature principale 110 constitue avec la seconde armature 210 la capacité de mesure proprement dite. Pour cela, la première armature 110 est formée pour l'essentiel d'une plage métallisée allongée verticalement. L'armature auxiliaire 120 est formée d'une plage métallisée prévue en partie inférieure de l'électrode centrale 100. L'armature auxiliaire 120 est séparée électriquement de l'armature principale 110. L'armature auxiliaire 120 constitue avec l'armature 210 placée en regard une capacité de référence placée au fond du réservoir et, par conséquent plongée en permanence dans le liquide, et, la surface de l'armature auxiliaire 120 étant connue, servant de capacité de référence pour déterminer la permittivité exacte du liquide concerné.

Selon la représentation donnée sur la figure 2 l'armature auxiliaire est de contour rectangulaire, allongée horizontalement. Cette disposition n'est cependant pas limitative.

L'armature auxiliaire 120 se prolonge par une piste de connexion 122. Cette piste de connexion 122 présente une faible largeur. Elle s'étend sur toute la hauteur de la première électrode 100, parallèlement à l'armature principale 110, pour autoriser une liaison avec les moyens de mesure, en partie supérieure de l'électrode.

On remarque cependant que la valeur de cette capacité de référence évolue en fonction du niveau du liquide dans le réservoir, en raison de la présence de la piste de connexion 122.

Pour s'affranchir de cette difficulté, il est prévu l'armature secondaire 130. Celle-ci présente la même géométrie, la même surface et la même disposition que la piste de connexion 122. Ainsi, l'armature secondaire 130 délimite avec l'armature principale 210, une capacité identique à celle définie par la piste de connexion 122 et l'armature principale 210, quel que soit le niveau du liquide dans le réservoir.

En effet, en soustrayant la valeur de capacité déterminée par les éléments d'armature 130, 210, de la valeur de capacité déterminée par les éléments d'armature 120, 122 et 210, on obtient une valeur de capacité de référence indépendante du niveau de liquide dans le réservoir.

Cette capacité de référence permet de connaître la permittivité du liquide. En effet, la capacité de référence est égale à ES/d, relation dans laquelle E désigne la permittivité du liquide, S représente la surface de l'armature auxiliaire 120 et d représente la distance séparant l'armature auxiliaire 120 de l'armature principale 210.

On aperçoit enfin sur la figure 2 l'armature de garde 140. On notera que celui-ci entoure complètement l'armature principale 110, qu'il entoure complètement l'armature auxiliaire 120 et sa piste de connexion 122 associée et, qu'il entoure également complètement l'armature secondaire 130.

L'armature de garde 140 permet de supprimer tout effet dit de bord, tant au niveau du condensateur de mesure formé par l'armature principale 110 et l'armature 210, qu'au niveau du condensateur de référencée formé par l'armature auxiliaire 120, la piste de connexion associée 122 et l'armature principale 210, ou encore au niveau du condensateur de compensation formé par l'armature secondaire 130 et l'armature principale 210.

Les entretoises 300 précitées sont conçues pour permettre la pénétration du liquide à mesurer dans l'espace d'épaisseur d compris entre l'électrode centrale 100 et les deux électrodes extérieures 200. La Demanderesse a déterminé que la distance d séparant les électrodes extérieures 200 de l'électrode centrale 100 doit être comprise entre 0,8 mm et 1,2 mm. En effet, si l'écart d est supérieur à 1,2 mm, la sonde capacitive perd de sa sensibilité (la capacitance étant inversement proportionnelle à la distance des armatures).

Au contraire, si l'écart d est inférieur à 0,8 mm, la sonde présente des erreurs importantes dues à l'effet de capillarité et la rétention de gouttelettes de liquide entre les électrodes.

L'effet de capillarité subsiste pour un écart d compris entre 0,8 et 1,2 mm. Cependant pour cette fourchette de valeur, l'effet de capillarité est aisément maîtrisable. Il répond à la relation h=A/$\rho$, relation dans laquelle :
A représente la tension superficielle du liquide,
d représente l'écart entre les armatures,
$\rho$ représente la masse volumique du liquide et,

g représente l'accélaration de la pesenteur.

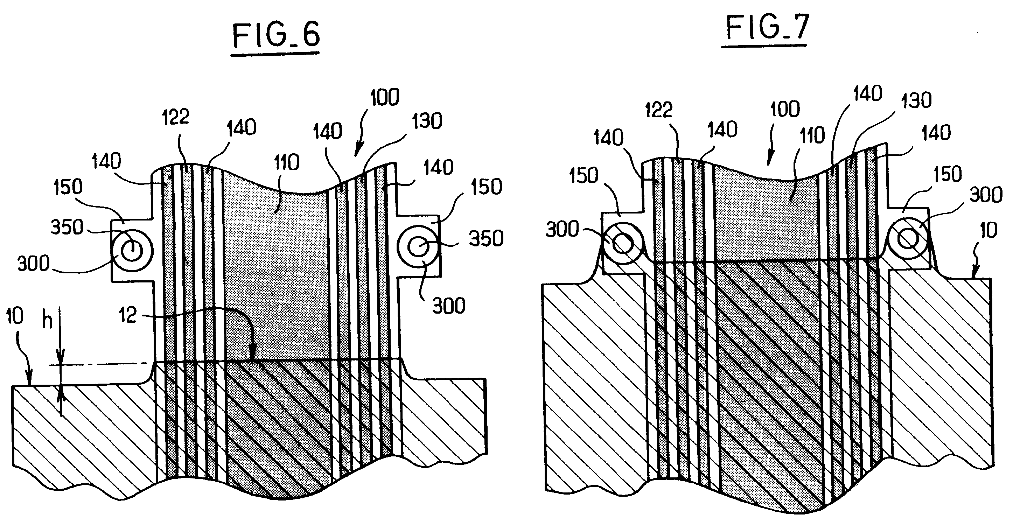

Cet effet de capillarité est illustré schématiquement sur la figure 6 annexée.

On aperçoit en effet sur cette figure 6 une face de l'électrode centrale 100. Le niveau libre du liquide, à distance de l'électrode centrale 100 est référencé 10. Le niveau du liquide au regard de l'électrode 100 est référencé 12. On notera que les niveaux 10 et 12 sont séparés d'une distance h.

L'effet de capillarité h est indépendant du volume des liquides et peu variable en température. Il suffit par conséquent pour s'en affranchir de disposer de moyens permettant de soustraire de la valeur de niveau obtenue selon la mesure, la hauteur différentielle h.

A titre d'exemple, on indiquera que pour les différents carburants disponibles actuellement sur le marché, la tension superficielle A se situe entre 26,8 et 28.10$^{-3}$N/m.

Pour les essences la masse volumique $\rho$ est de 0,7 à 0,75, et pour les gazoles ro est de 0,85.

Cela donne :

pour les essences, une hauteur différentielle h comprise 4,6 mm et 5 mm, et pour les gazoles une hauteur différentielle h comprise entre 3,9 mm et 4,2 mm.

On notera que pour l'eau la hauteur différentielle obtenue est de 9,3 mm.

Comme indiqué précédemment pour s'affranchir de l'effet de capillarité, il suffit donc de prendre en compte la hauteur différentielle h une fois pour toutes pour la mesure de niveau.

Toutefois, il est par ailleurs impératif de prévoir les entretoises 300 et les rivets de fixation 350 hors zone des armatures capacitives.

Selon la représentation donnée sur les figures 2 et 3, les entretoises 300 et les rivets de fixation 350 sont ainsi prévus au niveau d'oreilles 150, 250, en saillie sur les bords verticaux respectifs de l'électrode centrale 100 et des électrodes extérieures 200.

En effet, si comme représenté sur la figure 6, entre les électrodes planes, le niveau 12 du liquide est parallèle au niveau réel 10 du liquide, et à une distance constante h de celui-ci, en revanche au niveau des entretoises 300, l'effet de capillarité entraîne, comme représenté schématiquement sur la figure 7, des erreurs non maîtrisables et non répétitives.

Les entretoises 300 définissant la distance entre les armatures sont de préférence réalisées soit en alumine, soit en stéatite, soit en polymère à cristaux liquides, tels que par exemple les matériaux commercialisés sous la marque VECTRA.

Les trois matériaux précités susceptibles de composer les entretoises 300 ont une très bonne stabilité dimensionnelle dans les différents carburants, ainsi qu'en température.

Selon une autre caractéristique avantageuse de la présente invention, les deux faces de l'électrode centrale 100, et la face en regard métallisée des électrodes extérieures 200, au cas où celles-ci sont en stratifié, sont recouvertes d'un revêtement neutre a l'égard des carburants. Ce revêtement doit être d'épaisseur constante, puisqu'il intervient dans la permittivité des condensateurs ainsi formés, sans aucune porosité, et resister parfaitement aux différents carburants, qu'ils soient oxygénés ou non.

La présente invention propose différents matériaux susceptibles de composer ce revêtement.

Selon une première variante, le revêtement protecteur est formé par dépôt par sérigraphie d'un vernis cationique. Il peut s'agir par exemple d'un vernis commercialisé par la Société Holden Europe sous la dénomination CEI 9346. Ce vernis est déposé de préférence sous forme d'une épaisseur de l'ordre de 25 $\mu$.

Selon une seconde variante, le revêtement protecteur est formé par dépôt par sérigraphie d'un vernis polyimide ou époxy.

Selon une troisième variante conforme à la présente invention, le revêtement est formé par dépôt sous vide d'un polymère/poly-p-xylène type parylène C. Le revêtement peut posséder quelques $\mu$ d'épaisseur.

Selon encore une autre variante de réalisation, le revêtement protecteur peut être formé par dépôt d'une couche d'un tissu de verre imprégné époxy et pressé à chaud.

Bien entendu, la liaison électrique nécessaire entre les armatures et les moyens de mesure électroniques, en partie supérieure des électrodes, doit être assurée à travers le revêtement protecteur précité.

L'armature de garde 140 est placé au potentiel de la première armature principale 110, grâce à un étage de recopie de potentiel 410 (voir figure 8). Pour éliminer efficacement les erreurs, dans la détermination de la permittivité et dans la mesure, causées par les effets de bord, l'armature de garde présente de préférence une largeur l (voir figure 2) supérieure ou égale à deux fois l'écart d entre les armatures. L'armature de garde 140 doit par ailleurs être au plus prêt des armatures gardées. Selon l'invention la distance séparant l'armature de garde 140 des armatures gardées est de l'ordre de 0,4 mm.

Selon la représentation donnée sur la figure 2, l'armature principale 110 est formée d'une plage rectangulaire s'étendant sur la quasi-totalité de la hauteur du réservoir, et possédant des bords libres verticaux parallèles 111, 112.

Le cas échéant, l'armature principale 110 peut présenter des bords 111, 112 non rectilignes et non parallèles, adaptés en fonction de la courbe de jaugeage du réservoir.

Selon le mode de réalisation précédemment décrit au regard des figures 2 et 3, l'erreur potentielle dans la détermination de la permittivité du liquide, due à l'évolution de la capacité de référence en fonction du niveau du liquide, est éliminée grâce à une capacité différentielle, de même valeur, délimitée par l'armature secondaire 130 et l'armature principale 210.

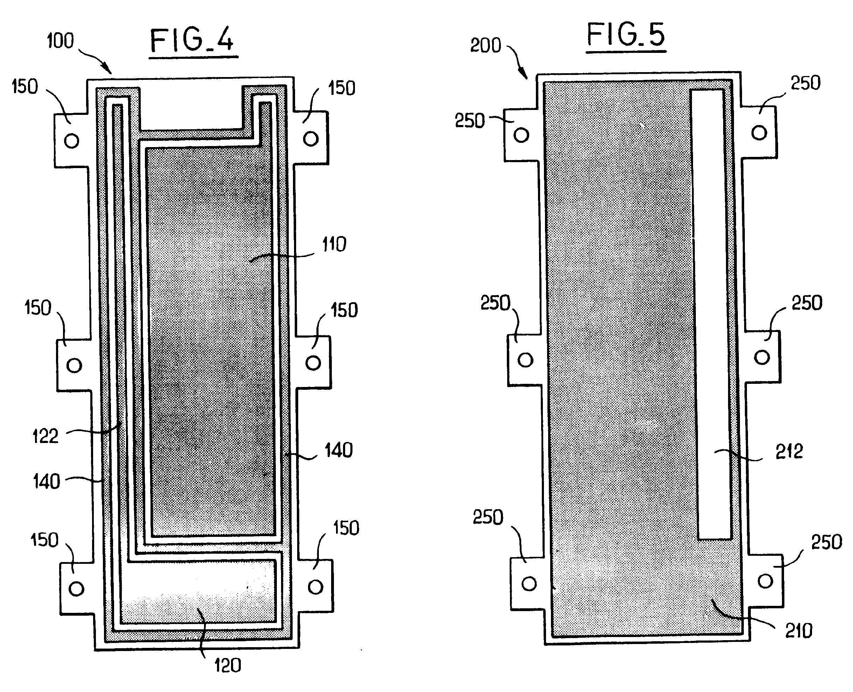

On peut également supprimer l'erreur due à la piste de connection 122, en supprimant la seconde armature 210 au regard de cette piste de connexion, comme représentée sur la figure 5 sous forme d'une fenêtre ou découpe 212 dans l'armature 210.

Dans ce cas, bien entendu, comme représenté sur la figure 4, il n'y a pas lieu de prévoir une armature secondaire 130 sur l'électrode centrale 100. La géométrie de l'armature de garde 140 est également simplifiée.

La géométrie des armatures donnée sur les figures annexées n'est bien entendu que schématique, pour faire apparaître clairement l'armature de garde 140, la piste de connexion 122 et l'armature secondaire de compensation 130. Dans la pratique, les armatures 122, 130 et 140 présenteront des largeurs nettement inférieures par rapport à la largeur de l'armature de détection 110.

Les modes de réalisation précédemment décrits peuvent faire l'objet de nombreuses variantes.

Par exemple, on peut envisager de placer les armatures 110, 120, 130 et 140 sur chacune des électrodes extérieures 200 et de placer une électrode principale 210, sur chacune des faces de l'électrode centrale 100.

On peut également envisager d'utiliser une électrode 100 monoface, et une seule électrode extérieure 200 en regard.

Dans ce cas il s'avère très préférentiel de placer l'armature de mesure 110 entourée de l'armature de garde 140 sur une première face d'un support en matériau électriquement isolant et de recouvrir la totalité de la seconde face de ce support d'une électrode reliée à l'armature de garde.

On va maintenant décrire la structure des moyens de mesure 400 représentés sur la figure 8 annexée et destinés à être reliés aux diverses armatures précitées.

Pour l'essentiel les moyens de mesure 400 comprennent un organe de multiplexage 420 et, un étage de recopie de potentiel 410 précité, un oscillateur 430, et une unité centrale à micro-processeur 440.

Les moyens 400 exploitent le fait que les différents condensateurs précités composant la sonde capacitive, ont une armature commune formée par la seconde armature principale 210.

Grâce au multiplexeur 420, les armatures 110, 120, 130 sont successivement connectées à l'oscillateur 430, de telle sorte que celui-ci génère une fréquence en fonction de la capacité du condensateur considéré.

Le cadencement de l'organe de multiplexage 420 est contrôlé par l'unité centrale 440, par l'intermédiaire des liaisons 441, 442 et 443.

L'étage de recopie de potentiel 410 est formé d'un amplificateur opérationnel. Celui-ci a son entrée non-inverseuse reliée à la sortie 422 de l'organe multiplexeur. L'entrée inverseuse de l'amplificateur opérationnel 410 est rebouclée sur sa sortie. De même, la sortie de l'amplificateur opérationnel 410 est reliée à l'armature de garde 140.

L'oscillateur 430 est formé de l'association d'un amplificateur opérationnel 431 et de resistances R432 à R436.

La sortie de l'oscillateur 400 est reliée à l'entrée 444 de l'unité centrale 440.

Ainsi, l'unité centrale 440 reçoit sur son entrée 444 une fréquence liée directement à la capacité délimitée soit par les armatures 110, 210, soit par les armatures 120 et 122, 210, soit par les armatures 130 et 210.

De préférence, le système présente une phase d'étalonnage cyclique de l'oscillateur 430, comprenant deux étapes au cours desquelles le multiplexeur 420 relie l'oscillateur 430 non pas à l'une des armatures prévue sur les électrodes 100, 200, mais à des condensateurs présentant un écart de capacité connu.

Il peut s'agir par exemple dans une première étape, d'une capacité nulle (représentée schématiquement par l'entrée 424 sur la figure 8) et dans une seconde étape d'une capacité C426 précise et connue.

La fréquence disponible en sortie de l'oscillateur 430 étant de la forme $F = aC + b$, les deux étapes précitées d'étalonnage permettent aisément, connaissant la valeur de la capacité C426 d'étalonner l'oscillateur 430 par détermination des constantes a et b.

Cet étalonnage permet ultérieurement de définir avec précisions les capacités formées par les condensateurs 110-210 ou 120 et 122-210 ou 130-210.

Ce processus est illustré schématiquement sur la figure 9.

Sur cette figure on distingue des cycles de mesure divisés en cinq étapes référencées T1 à T5.

Aux étapes T1, aucun condensateur n'est relié à l'oscillateur 430. Aux étapes T2 le condensateur C426 est relié à l'oscillateur 430 par le multiplexeur 420. Les étapes T1 et T2 permettent d'étalonner l'oscillateur 430.

Aux étapes T3, le multiplexeur 420 relie l'armature 130 à l'entrée de l'oscillateur 430. L'étape T3 permet par conséquent de mesurer la valeur de la capacité définie par l'armature secondaire 130 et l'armature principale 210. On rappelle que cette capacité est égale, quel que soit le niveau du liquide à celle définie par la piste de connexion 122 et l'armature principale 210.

Aux étapes T4, le multiplexeur 420 relie la piste de connexion 122 à l'oscillateur 430. Au cours des étapes T4 on obtient ainsi en sortie de l'oscillateur 430, une fréquence fonction de la capacité définie par l'armature auxiliaire 120 combinée à cette piste de connexion 122 et l'armature principale 210.

En soustrayant la capacité obtenue aux étapes T3 de celles obtenues aux étapes T4, on obtient directement une capacité de référence, qui connaissant la surface de l'armature secondaire 120 et la distance d entre les armatures, permet de connaître la permittivité du liquide.

Aux étapes T5, l'organe de multiplexage 420 relie l'armature principale 110 et l'oscillateur 430. La mesure ainsi obtenue permet, connaissant la permittivité du liquide, de déterminer le niveau dans le réservoir.

En effet dans la mesure où la hauteur de carburant entre les électrodes 110, 210 suit le niveau de carburant dans le réservoir, la capacité mesurée Cmes entre les électrodes 110 et 210 dépend du niveau de carburant dans le réservoir.

Plus précisément la capacité mesurée aux bornes des électrodes 110, 210 correspond à un schéma électrique de deux capacités en parallèle : l'une C1 correspondant à la partie immergée des électrodes et fonction de la permittivité de carburant, l'autre C2 correspondant à la partie des électrodes située au-dessus du carburant et fonction de la permittivité de l'air.

On a donc Cmes = C1 + C2.

Quelque soit la géométrie de l'électrode de mesure 110, la répartition des surfaces immergée et hors liquide répond à l'équation :

surface totale = surface immergée + surface hors liquide.

La distance séparant les électrodes 110 et 210 étant constante et identique pour C1 et C2, on a :

K =        surface immergée de la première armature immergée 110/surface totale de la première armature immergée 110

= (Cmes - Cair)/(Cimm - Cair)

avec Cmes =        capacité mesurée entre les première et seconde électrodes 110 et 210,

Cair =        capacité pour première armature 110 et seconde armature 210 dans l'air

Cimm =        capacité pour première armature 110 et seconde armature 210 complètement immergées.

K =        niveau de liquide/niveau de liquide maxi

K =        0 pour réservoir vide

K =        1 pour réservoir plein

Cair peut être défini par calcul lors de la conception du système connaissant la surface des électrodes. Cair est alors mémorisé dans une mémoire associé à l'unité centrale 440.

Cair peut également être défini par mémorisation de la valeur de capacité mesurée entre les électrodes 110 et 210 avant que du carburant ne soit placé dans le réservoir.

Cimm est défini par calcul par l'unité centrale 440 connaissant la surface des électrodes 110, 210 et la permittivité du carburant mesurée à l'aide des électrodes 120, 210.

Ainsi connaissant Cmes, Cair et Cimm, l'unité centrale 440 peut déterminer le coefficient K qui est représentatif du niveau de carburant dans le réservoir.

Le cas échéant, le système de mesure conforme à la présente invention peut exploiter une pluralité de sondes capacitives orientées différemment dans le réservoir, pour tenir compte par exemple de l'assiette de celui-ci.

Dans ce cas, il n'est pas nécessaire que les sondes capacitives auxiliaires utilisées possèdent des armatures de référence. Il suffit alors de connecter les armatures principales similaires à l'armature 110, sur des entrées adaptées de l'organe de multiplexage 420. On a représenté schématiquement cette disposition sur la figure 8, sous forme d'entrée référencée 110bis et 110ter pour l'organe de multiplexage.

Les anneaux de garde des diverses sondes peuvent être reliés en commun.

On notera que les secondes armatures principales 210 sont toutes reliées à la masse du montage.

Dans le cas de sondes capacitives auxiliaires (110bis, 110ter par exemple), le cycle de mesure doit être augmenté d'autant d'étapes de multiplexage, comme représenté en T6 et T7 pour les armatures 110bis et 110ter sur la figure 10.

Les moyens de mesure 400 sont par ailleurs avantageusement adaptés pour détecter toute présence éventuelle d'eau accumulée dans le fond du réservoir. Pour cela l'unité centrale 440 compare en permanence la permittivité $\varepsilon$ du liquide obtenu grâce à l'armature de référence 120, à une permittivité seuil prédéterminée.

On sait en effet que la permittivité des carburants est très différente de la permittivité de l'eau.

A titre d'exemple, la permittivité pour les différents carburants disponibles actuellement sur le marché, se situe entre 2 et 4,5, alors que la permittivité de l'eau est supérieure à 80.

De préférence l'unité centrale 440 est associée à des moyens de mémorisation 450 aptes à contenir une valeur de permittivité moyenne, $\varepsilon$ moyen, qui sera exploité en cas de détection d'eau dans le fond du réservoir, c'est-à-dire lorsque la permittivité mesurée par l'armature auxilaire 120 n'est plus représentative.

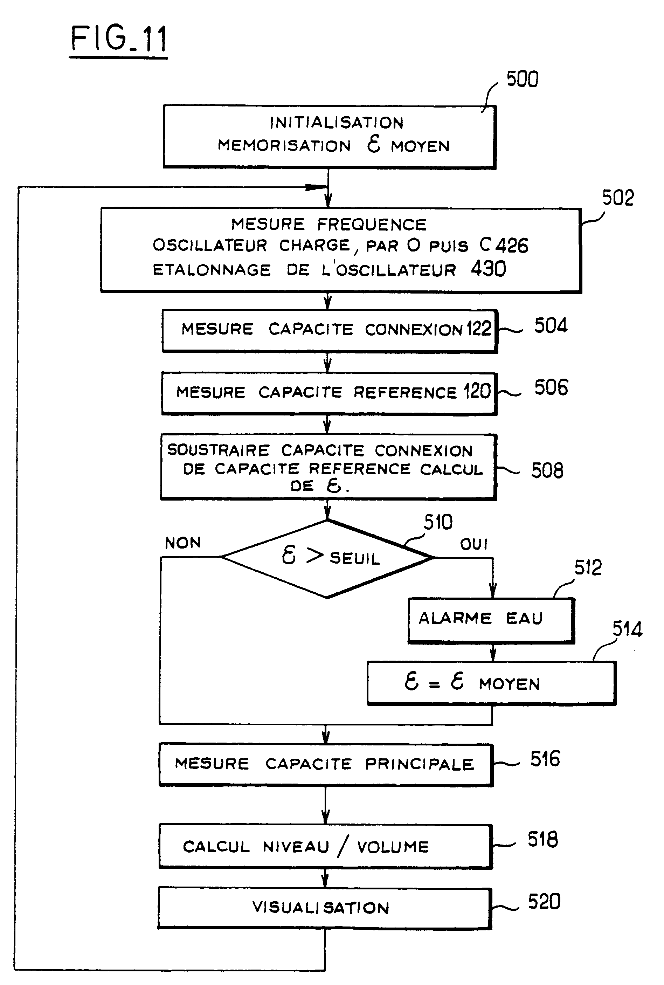

Le procédé complet de mesure conforme à la présente invention est représenté schématiquement sur la figure 11 annexée.

Comme représenté sur cette figure, dans une étape initiale 500, on procède à la mémorisation dans les moyens 450 de la valeur de permittivité moyenne ε moyen.

A l'étape 502, qui correspond aux étapes T1 et T2 des figures 9 et 10, l'organe de multiplexage 420 relie successivement son entrée 424 et le condensateur C426 à l'oscillateur 430, pour étalonner celui-ci.

A l'étape 504, l'organe du multiplexage 420 relie l'armature secondaire 130 à l'oscillateur 430. L'unité centrale 440 peut ainsi déterminer une capacité égale à celle de la piste de connexion 122.

A l'étape 506, l'organe de multiplexage 420 relie la piste de connexion 122 à l'oscillateur 430. L'unité centrale 440 détermine ainsi une capacité égale à la somme de celle définie par l'armature auxiliaire de référence 120 et la piste de connexion 122.

A l'étape 508, l'unité centrale 440 retranche la capacité obtenue à l'étape 504 de celle obtenue à l'étape 506. Le résultat permet de déterminer la permittivité du liquide, connaissant la surface de l'armature 120 et la distance entre cette armature et l'armature principale 210.

A l'étape 510 l'unité centrale 440 teste si la permittivité ε obtenue à l'étape 508 est supérieure ou non à un seuil donné.

Dans l'affirmative, l'unité centrale 440 considère que de l'eau est présente dans le fond du réservoir et génère une alarme à l'étape 512. Par ailleurs, à l'étape consécutive 514, l'unité centrale 440 impose une valeur de permittivité égale à ε moyen contenu dans les moyens 450.

L'étape 514 est suivie de l'étape 516. De même, le test 510 lorsqu'il reçoit une réponse négative est suivi de l'étape 516.

Au cours de cette étape 516, l'organe de multiplexage 420 relie l'armature principale 110 à l'oscillateur 430.

L'unité centrale 440 permet ainsi de déterminer la capacité de mesure définie entre les armatures principales 110 et 210.

Cette valeur est exploitée à l'étape 518, connaissant la permittivité du liquide, pour déterminer le niveau dans le réservoir.

A l'étape 520 consécutive, l'unité centrale 440 procède à une visualisation du niveau et/ou du volume, du liquide contenu dans le réservoir.

Selon la représentation donnée sur la figure 8, l'information d'alarme (étape 512) est délivrée sur la sortie 452 de l'unité centrale (la sortie 452 peut être reliée à un simple voyant), tandis que l'information niveau et/ou volume de liquide est délivrée sur la sortie 454 de cette unité.

La sortie 454 peut commander un indicateur de type logomètre.

Généralement les logomètres comprennent plusieurs bobines croisées, soit de préférence deux bobines croisées à 90°, un axe guidé à rotation, un aimant solidaire de l'axe glacé à l'intérieur des bobines, une aiguille indicatrice externe aux bobines et solidaire de l'axe.

De préférence le signal de commande appliqué aux bobines du logomètre présente un rapport cyclique variable en fonction du niveau de carburant K.

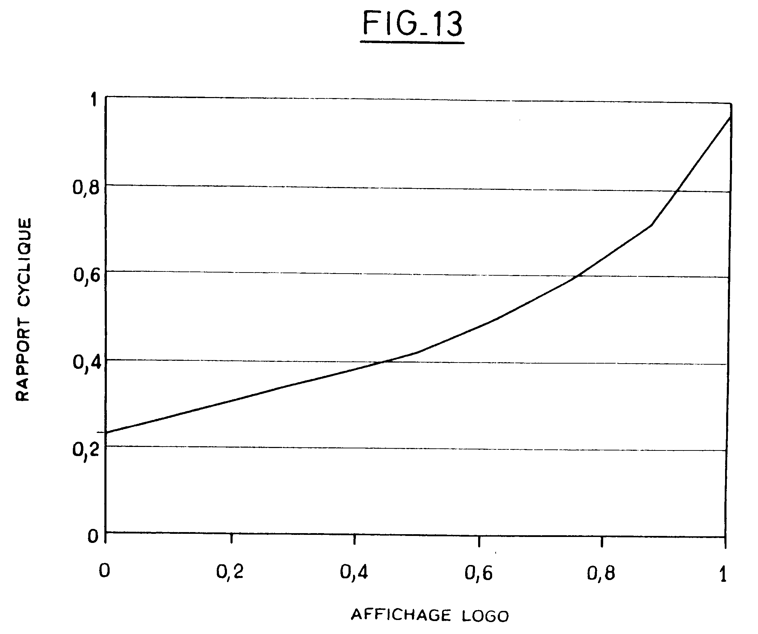

Cependant comme représenté sur la figure 13 annexée, la courbe de transfert : rapport cyclique/déviation aiguille des logomètres n'est en général pas linéaire.

Cette non linéarité peut être corrigée par l'unité centrale 440 dans la définition du rapport cyclique.

Elle peut également être corrigée par la géométrie de l'électrode de mesure 110, lors de la conception de celle-ci.

Selon une variante, en cas de détection d'eau à l'étape de test 510, l'unité centrale peut exploiter non pas une valeur ε moyen pré-mémorisée, mais utiliser comme valeur de permittivité, la dernière valeur mémorisée acceptable, rafraîchie constamment dans les moyens 450.

Pour obtenir une information de niveau précise, il est nécessaire d'avoir une égalité des capacités parasites entre les entrées du multiplexeur 420. Cette condition n'est pas toujours réalisable. Dans ce cas on peut mesurer, pour chaque système, les différences de capacités d'entrée du multiplexeur avant le câblage de la sonde capacitive et mémoriser les capacités parasites d'entrée mesurées dans une mémoire non volatile de sorte que l'unité centrale 440 puisse tenir compte de ces capacités parasites lors de la détermination du niveau du carburant.

Par ailleurs, les moyens formant le multiplexeur 440 possèdent inévitablement des capacités parasites dont certaines évoluent en fonction du niveau de carburant. Pour éviter que ces capacités parasites non constantes ne perturbent la mesure il est prévu de préférence selon l'invention que des transistors, tels que des transistors MOS, shuntent les entrées du multiplexeur 440 qui ne sont pas sélectionnées.

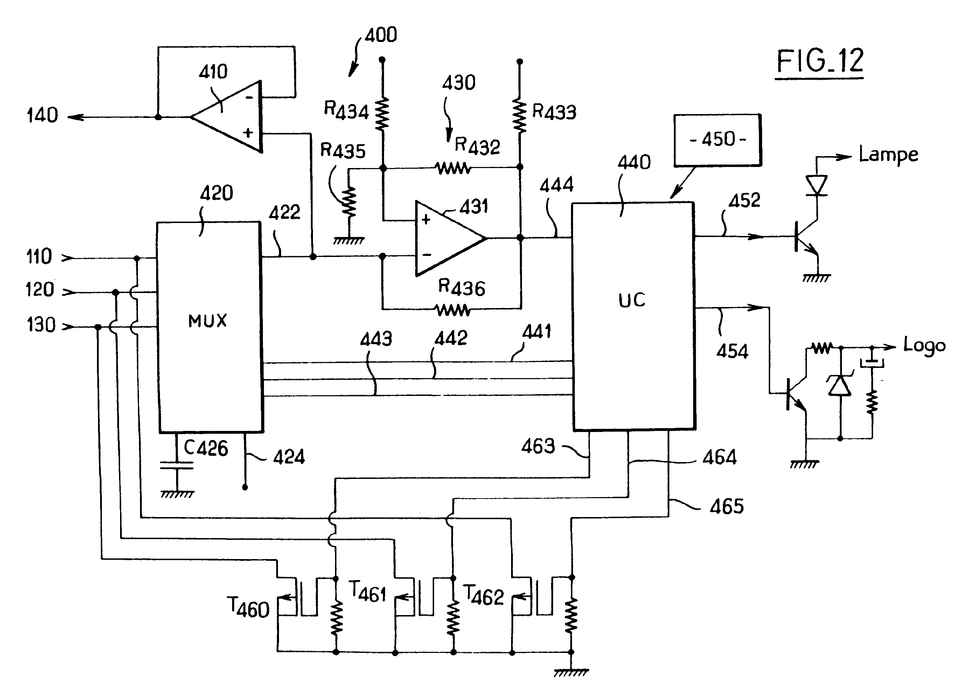

Ces transistors sont représentés sur la figure 12 annexée sous les références T460, T461 et T462.

8

Ces transistors T460, T461 et T462 ont leur trajet de conduction principale relié respectivement entre les entrées du multiplexeur 420 associées aux électrodes 110, 120, 130 et la masse.

Les électrodes de commande de ces transistors T460, T461, T462 sont commandées par l'unité centrale 440, par l'intermédiaire des liaisons 463, 464, 465.

Le cas échéant, l'unité centrale 440 peut être conçue pour appliquer en outre un lissage sur l'information obtenue.

De façon connue en soit, la sonde capacitive S est avantageusement formée dans un tube vertical de tranquilisation, anti-vagues, relié au réservoir par un alésage calibré.

Le cas échéant, la paroi de ce tube anti-vagues peut être formé par les électrodes externes 200 elles-mêmes.

Dans ce cas les électrodes sont conformées de sorte que le volume de carburant qu'elles entourent ne communique avec le réservoir que par un ou des orifice(s) de faible dimension, de préférence un orifice inférieur et un orifice supérieur. On obtient ainsi une constante de temps hydraulique qui ralentit les mouvements du niveau de liquide dans la chambre de mesure circonscrite par les électrodes par rapport au mouvement du niveau dans le réservoir.

La réalisation du tube antivagues à l'aide des électrodes elles-mêmes est préférée à la disposition de la sonde capacitive dans un tube de tranquilisation car moins encombrante.

Le cas échéant, la détection d'eau dans le fond du réservoir peut être opérée non pas par mesure de permittivité du liquide, mais par mesure de la résistance entre les armatures 120 et 210.

Bien entendu la présente invention n'est pas limitée aux modes de réalisation particuliers qui viennent d'être décrits, mais s'étend à toute variante conforme à son esprit.

Selon une autre caractéristique avantageuse de la présente invention, l'unité centrale 440 peut être adaptée pour déterminer la nature du carburant contenu dans le réservoir à partir de la permittivité mesurée sur la base de la capacité définie par l'armature auxiliaire 120 et l'armature principale 210.

Pour cela l'unité centrale 440 peut par exemple comparer la valeur de permittivité mesurée avec des valeurs prédéterminées mémorisées.

On sait cependant que la permittivité des carburants évolue en fonction de la température.

Pour obtenir une information fiable, il est donc préférable de mesurer la température du carburant et de corriger la permittivité mesurée du carburant en fonction de la température mesurée. La température du carburant peut par exemple être mesurée à l'aide d'une thermistance.

Selon une autre caractéristique avantageuse de la présente invention le dispositif de mesure est également conçu pour délivrer une information lorsque le niveau de carburant présent dans le réservoir tombe dans une plage de réserve donnée.

Cette information peut être obtenue en comparant le paramètre K précité à une valeur seuil.

L'information de niveau tombant dans une plage de réserve peut également être détectée à l'aide d'électrodes spécifiques placées à proximité du fond du réservoir, par exemple d'électrodes placées au-dessus de l'électrode auxiliaire 120.

## Revendications

1.  Dispositif de mesure de niveau et/ou de volume d'un liquide contenu dans un réservoir, comprenant une sonde capacitive comportant au moins deux armatures principales (110, 210) séparées, parallèles, généralement verticales, destinées à être plongées dans le liquide, et un moyen de mesure de capacité électrique (400) possédant une entrée de détection et une masse, l'entrée de détection étant reliée à une première armature principale (110) et la masse étant reliée à la seconde armature principale (210), caractérisé par le fait que la première armature (110) est entourée d'une armature de garde (140) et que le dispositif comprend un étage de recopie de potentiel (410) qui a son entrée reliée à la première armature (110) et sa sortie à l'armature de garde (140), l'armature de garde (140) étant ainsi placée au même potentiel que la première armature (110).

2.  Dispositif selon la revendication 1, caractérisé par le fait que la sonde capacitive possède, à sa partie inférieure, des éléments d'armature auxiliaires (120) qui définissent une capacité de référence permettant de déterminer la permittivité du fluide.

3.  Dispositif selon la revendication 2, caractérisé par le fait que l'un des éléments d'armature auxiliaire (20) est confondu avec l'une des armatures principales (210).

**4.** Dispositif selon l'une des revendications 2 ou 3 caractérisé par le fait que l'un des éléments d'armature auxiliaires (120) fait corps avec la seconde armature principale (210).

**5.** Dispositif selon l'une des revendications 3 ou 4 caractérisé par le fait que l'autre élément d'armature auxiliaire (120) est lié à une piste de connexion (122) qui s'étend jusqu'en partie supérieure de la sonde.

**6.** Dispositif selon la revendication 5 caractérisé par le fait qu'il comprend des éléments d'armature secondaires (130, 210) définissant une capacité de même géométrie et même localisation que celle délimitée par la piste de connexion (122) et la seconde armature principale (210).

**7.** Dispositif selon la revendication 6, caractérisé par le fait que l'un des éléments d'armature secondaires (130, 210) est confondu avec la seconde armature principale (210).

**8.** Dispositif selon l'une des revendications 6 ou 7 caractérisé par le fait qu'il comprend des moyens conçus pour soustraire la valeur de capacité déterminée par les éléments d'armature secondaires (130, 210), de la valeur de capacité déterminée par les éléments d'armature auxiliaires (120) et la piste de connexion associée (120, 122 ; 210).

**9.** Dispositif selon l'une des revendications 1 à 8 caractérisé par le fait qu'il comprend au moins un support en matériau électriquement isolant qui porte la première armature principale (110), une armature auxiliaire (120) placée en partie inférieure du support en dessous de l'armature principale (110), une piste de connexion (122) reliée à l'armature auxiliaire (120) et qui s'étend jusqu'en partie supérieure du support, un élément d'armature secondaire (130) de même géométrie que la piste de connexion (122) et qui s'étend parallèlement à celle-ci, et l'armature de garde (140) qui entoure l'armature principale (110), qui entoure l'armature auxiliaire (120) et sa piste de connexion associée (122), et qui entoure l'élément d'armature secondaire (130), la seconde armature (210) étant supportée parallèlement au support par des entretoises (300), en matériau électriquement isolant, et s'étendant en regard de l'armature principale (110), de l'armature auxiliaire (120), de sa piste de connexion (122), et de l'armature secondaire (130).

**10.** Dispositif selon l'une des revendications 1 à 5 caractérisé par le fait que la sonde capacitive comprend au moins un support en matériau électriquement isolant qui porte la première armature principale (110), une armature auxiliaire (120) placée en partie inférieure du support en dessous de l'armature principale (110), une piste de connexion (122) reliée à l'armature auxiliaire et qui s'étend jusqu'en partie supérieure du support, et l'armature de garde (140) qui entoure l'armature principale (110) et qui entoure l'armature auxiliaire (120) et sa piste de connexion associée, la seconde armature (210) étant supportée parallèlement au support par des entretoises (300) en matériau électriquement isolant, et étant conformée pour s'étendre en regard de l'armature principale (110) et de l'armature auxiliaire (120) mais ne pas s'étendre en regard de sa piste de connexion (122).

**11.** Dispositif selon l'une des revendications 1 à 10 caractérisé par le fait que la sonde capacitive comprend un support central (100) en matériau électriquement isolant revêtu, sur chacune de ses deux faces, d'armatures, et deux éléments d'électrode externes (200) placés respectivement en regard des faces du support et séparés de celles-ci par des entretoises (300) en matériau électriquement isolant.

**12.** Dispositif selon la revendication 11, caractérisé par le fait que le support central (100) porte sur chacune de ses deux faces, au moins une armature principale (110) et une armature auxiliaire (120) définissant une capacité de référence, reliée à une piste de connexion (122) qui s'étend jusqu'en partie supérieure de la sonde.

**13.** Dispositif selon l'une des revendications 11 ou 12, caractérisé par le fait que les différents éléments d'armature (110, 120, 130, 140) prévus sur les deux faces du support central (100) sont reliés électriquement respectivement deux à deux et les deux éléments d'électrode externes (200) sont reliés électriquement entre eux.

**14.** Dispositif selon l'une des revendications 1 à 13, caractérisé par le fait que certaines au moins des armatures sont portées par un support en matériau électriquement isolant choisi dans le groupe comprenant : les polyimides et les résines époxy chargées en tissu de verre.

**15.** Dispositif selon l'une des revendications 1 à 14, caractérisé par le fait que les armatures sont réalisées en cuivre par méthode soustractive.

16. Dispositif selon l'une des revendications 1 à 15, caractérisé par le fait que la distance séparant les deux armatures principales (110, 210) est comprise entre 0,8 et 1,2 mm.

17. Dispositif selon l'une des revendications 1 à 16, caractérisé par le fait qu'il comprend des moyens conçus pour corriger l'information obtenue d'une valeur liée à l'effet de capillarité et définie par la relation :

$$h = \frac{A}{d\,\rho\,g}\text{ où}$$

A représente la tension superficielle du liquide,
d représente la distance séparant les armatures,
$\rho$ représente la masse volumique du liquide et,
g représente l'accélération de la pesanteur.

18. Dispositif selon l'une des revendications 1 à 17, caractérisé par le fait que la distance séparant les armatures (110, 210) est définie par des entretoises (300) en matériau électriquement isolant placées en dehors des zones actives d'armatures.

19. Dispositif selon l'une des revendications 1 à 18, caractérisé par le fait que la seconde armature (210) est réalisée à base de fer étamé ou d'acier inoxydable.

20. Dispositif selon l'une des revendications 1 à 19, caractérisé par le fait que les entretoises (300) sont réalisées à base du matériau choisi dans le groupe comprenant : l'alumine, la steatite, et les polymères à cristaux liquides.

21. Dispositif selon l'une des revendications 1 à 20, caractérisé par le fait que certaines au moins des armatures sont protégées par une couche de matériau électriquement isolant.

22. Dispositif selon la revendication 21, caractérisé par le fait que le matériau électriquement isolant est choisi dans le groupe comprenant un vernis cationique, un vernis polyimide, un vernis epoxy, un polymère / poly-p-xylène, une résine époxy chargée de fibres de verre.

23. Dispositif selon l'une des revendications 1 à 22, caractérisé par le fait que la géométrie des armatures principales reproduit la courbe de jaugeage du réservoir.

24. Dispositif selon l'une des revendications 1 à 23, caractérisé par le fait que la largeur de l'armature de garde (140) est égale à 2d, où d représente la distance séparant les armatures.

25. Dispositif selon l'une des revendications 1 à 24, caractérisé par le fait que la distance séparant l'armature de garde (140), des armatures, est inférieure à 1 mm et de préférence de l'ordre de 0,4 mm.

26. Dispositif selon l'une des revendications 1 à 25, caractérisé par le fait qu'il comprend des moyens conçus pour comparer la permittivité mesurée du liquide, avec un seuil, et générer une alarme si la permittivité mesurée dépasse le seuil.

27. Dispositif selon l'une des revendications 1 à 26, caractérisé par le fait qu'il comprend des moyens aptes à mémoriser une valeur de permittivité moyenne, et à exploiter cette permittivité moyenne si la permittivité mesurée dépasse un seuil.

28. Dispositif selon l'une des revendications 1 à 26, caractérisé par le fait qu'il comprend des moyens conçus pour comparer la permittivité mesurée du liquide, avec un seuil, et des moyens conçus pour mémoriser la dernière valeur obtenue de permittivité mesurée, tant que celle-ci ne dépasse pas le seuil.

29. Dispositif selon l'une des revendications 1 à 28, caractérisé par le fait que le moyen de mesure de capacité comprend un oscillateur (430) chargé par la sonde capacitive et un moyen (440) sensible à la fréquence de l'oscillateur (430).

30. Dispositif selon l'une des revendications 1 à 29, caractérisé par le fait qu'il comprend un organe de multiplexage (420) conçu pour relier successivement les diverses armatures à l'oscillateur (430).

**31.** Dispositif selon l'une des revendications 29 ou 30, caractérisé par le fait qu'il comprend des moyens conçus pour charger successivement l'oscillateur (430) par des condensateurs présentant une différence de capacité connue, dans une phase initiale d'étalonnage.

**32.** Dispositif selon l'une des revendications 1 à 31, caractérisé par le fait que :
- la sonde capacitive possède à sa partie inférieure, des éléments d'armature auxiliaires (120, 210) qui définissent une capacité de référence permettant de déterminer la permittivité du fluide,
- il est prévu des moyens conçus pour comparer la permittivité mesurée du fluide avec un seuil, générer une alarme si la permittivité mesurée dépasse le seuil, et réaliser la mesure de niveau et/ou volume sur la base d'une valeur de permittivité prédéfinie si la permittivité mesurée dépasse le seuil.

**33.** Dispositif selon l'une des revendications 1 à 32, caractérisé par le fait que les diverses armatures (110, 210) sont planes et parallèles.

**34.** Dispositif selon la revendication 1, caractérisé par le fait que la première armature (110) entourée de l'armature de garde (140) est placée sur une première face d'un support plan en matériau électriquement isolant et que la seconde face du support est recouverte d'une électrode liée à l'armature de garde.

**35.** Dispositif selon l'une des revendications 1 à 34, caractérisé par le fait que le niveau de liquide est déterminé par calcul d'un coefficient K tel que :

K = surface immergée de la première armature immergée (110) surface totale de la première armature immergée (110)

= (Cmes - Cair)/(Cimm - Cair)

avec Cmes = capacité mesurée entre les première et seconde électrodes (110 et 210),
Cair = capacité pour première armature (110) et seconde armature (210) dans l'air
Cimm = capacité pour première armature (110) et seconde armature (210) complètement immergées.

**36.** Dispositif selon la revendication 35, caractérisé par le fait que Cair est défini par calcul lors de la conception du système connaissant la surface des armatures et mémorisé dans un mémoire.

**37.** Dispositif selon la revendication 35, caractérisé par le fait que Cair est défini par mémorisation de la valeur de capacité mesurée entre la première et la seconde armature (110, 210) avant que du liquide ne soit placé dans le réservoir.

**38.** Dispositif selon la revendication 35, caractérisé par le fait que Cair est défini par une capacité discrète.

**39.** Dispositif selon la revendication 30, caractérisé par le fait que des transistors T460, T461, T462 sont prévus pour shunter sélectivement les entrées de l'organe de multiplexage (420) qui ne sont pas sélectionnés.

**40.** Dispositif selon l'une des revendications 1 à 39, caractérisé par le fait que l'information de niveau et/ou de volume est délivrée par un appareil indicateur de type logomètre recevant un signal de commande de rapport cyclique variable.

**41.** Dispositif selon la revendication 40, caractérisé par le fait que la géométrie de la première armature (110) est conformé pour corriger la non linéarité de la courbe de transfert : rapport cyclique/déviation de l'aiguille du logomètre.

**42.** Dispositif selon l'une des revendications 1 à 41, caractérisé par le fait que la sonde capacitive (S) est associée à un tube de tranquilisation antivagues relié au réservoir par au moins un alésage calibré.

**43.** Dispositif selon la revendication 42, caractérisé par le fait que le tube de tranquilisation est formé par les électrodes de la sonde elle-même.

**44.** Dispositif selon l'une des revendications 1 à 43, caractérisé par le fait qu'il comprend une unité centrale (440) conçue pour déterminer la nature du liquide par comparaison de la valeur de la permittivité mesurée de ce liquide avec des valeurs prédéterminées.

**45.** Dispositif selon la revendication 44, caractérisé par le fait qu'il comprend en outre des moyens de mesure de la température de liquide et de correction de la valeur de permittivité mesurée en fonction de la température mesurée.

**Patentansprüche**

1. Vorrichtung zur Niveau- und/oder Volumenmessung einer in einem Behälter enthaltenen Flüssigkeit, mit einer kapazitiven Sonde, die wenigstens zwei getrennte, parallele, im wesentlichen vertikale Hauptbelegungen (110, 210) zum Eintauchen in die Flüssigkeit und eine Einrichtung zum Messen elektrischer Kapazität (400) aufweist, die einen Erfassungseingang und einen Masseanschluß aufweist, wobei der Erfassungseingang mit einer ersten Hauptbelegung (110) und der Masseanschluß mit der zweiten Hauptbelegung (210) verbunden sind, dadurch gekennzeichnet, daß die erste Belegung (110) von einer Schutzbelegung (140) umgeben ist, und die Vorrichtung eine Potentialreproduzierstufe (410) umfaßt, die an ihrem Eingang mit der ersten Belegung (110) und an ihrem Ausgang mit der Schutzbelegung (140) verbunden ist, wobei die Schutzbelegung (140) auf diese Weise auf dasselbe Potential wie die erste Belegung (110) gesetzt ist.

2. Vorrichtung nach Anspruch 1, dadurch gekennzeichnet, daß die kapazitive Sonde an ihrem unteren Abschnitt Zusatzbelegungselemente (120) aufweist, die eine Referenzkapazität bilden, welche die Bestimmung der Dielektrizitätskonstanten der Flüssigkeit ermöglicht.

3. Vorrichtung nach Anspruch 2, dadurch gekennzeichnet, daß eines der Zusatzbelegungselemente (120) mit einer der Hauptbelegungen (210) vereinigt ist.

4. Vorrichtung nach einem der Ansprüche 2 oder 3, dadurch gekennzeichnet, daß eines der Zusatzbelegungselemente (120) mit der zweiten Hauptbelegung (21) aus einem Stück ist.

5. Vorrichtung nach einem der Ansprüche 3 oder 4, dadurch gekennzeichnet, daß das andere Zusatzbelegungselement (120) mit einer Verbindungsbahn (122) verbunden ist, die sich bis in den oberen Abschnitt der Sonde erstreckt.

6. Vorrichtung nach Anspruch 5, dadurch gekennzeichnet, daß sie Sekundärbelegungselemente (130, 210) aufweist, die eine Kapazität von gleicher Geometrie und gleicher Lage wie jene definieren, die von der Verbindungsbahn (122) und der zweiten Hauptbelegung (210) begrenzt ist.

7. Vorrichtung nach Anspruch 6, dadurch gekennzeichnet, daß das eine Sekundärbelegungselement (130, 210) mit der zweiten Hauptbelegung (210) vereinigt ist.

8. Vorrichtung nach einem der Ansprüche 6 oder 7, dadurch gekennzeichnet, daß sie Einrichtungen aufweist, die ausgelegt sind, um den von den Sekundärbelegungselementen (130, 210) ermittelten Kapazitätswert von dem durch die Zusatzbelegungselemente (120) und der zugehörigen Verbindungsbahn (120, 122; 210) ermittelten Kapazitätswert zu subtrahieren.

9. Vorrichtung nach einem der Ansprüche 1 bis 8, dadurch gekennzeichnet, daß sie wenigstens einen Träger aus elektrisch isolierendem Werkstoff aufweist, der die erste Hauptbelegung (110) trägt, eine im unteren Abschnitt des Trägers unterhalb der Hauptbelegung (110) angeordnete Zusatzbelegung (120), eine Verbindungsbahn (122), die mit der Zusatzbelegung (120) verbunden ist und sich bis in den oberen Abschnitt des Trägers erstreckt, ein Sekundärbelegungselement (130) von gleicher Geometrie wie die Verbindungsbahn (122) und mit zu ihr paralleler Erstreckung, und die Schutzbelegung (140), welche die Hauptbelegung (110) umgibt, die Zusatzbelegung (120) und ihre zugehörige Verbindungsbahn (122) umgibt, und das Sekundärbelegungselement (130) umgibt, wobei die zweite Belegung (210) durch Abstandshalter (300) aus elektrisch isolierendem Werkstoff parallel zum Träger abgestützt ist und sich der Hauptbelegung (110), der Zusatzbelegung (120), ihrer Verbindungsbahn (122) und der Sekundärbelegung (130) gegenüberliegend erstreckt.

10. Vorrichtung nach einem der Ansprüche 1 bis 5, dadurch gekennzeichnet, daß die kapazitive Sonde wenigstens einen Träger aus elektrisch isolierendem Werkstoff aufweist, der die erste Hauptbelegung (110) trägt, eine im unteren Abschnitt des Trägers unterhalb der Hauptbelegung (110) angeordnete Zusatzbelegung (120), eine Verbindungsbahn (122), die mit der Zusatzbelegung verbunden ist und sich bis in den oberen Abschnitt des Trägers erstreckt, und die Schutzbelegung (140), welche die Hauptbelegung (110) umgibt und die Zusatzbelegung (120) und ihre zugehörige Verbindungsbahn umgibt, wobei die zweite Belegung (210) durch Abstandshalter (300) aus elektrisch isolierendem Werkstoff parallel zum Träger abgestützt ist und so gestaltet ist, daß sie sich der Hauptbelegung (110) und der Zusatzbelegung (120), aber nicht ihrer Verbindungsbahn (122) gegenüberliegend erstreckt.

11. Vorrichtung nach einem der Ansprüche 1 bis 10, dadurch gekennzeichnet, daß die kapazitive Sonde einen mittigen Träger (100) aus elektrisch isolierendem Werkstoff aufweist, der auf jeder seiner beiden Seiten mit Belegungen beschichtet ist, und zwei externe Elektrodenelemente (200), die je den Trägerseiten gegenüber und von ihnen durch Abstandshalter (300) aus elektrisch isolierendem Werkstoff getrennt angeordnet sind.

12. Vorrichtung nach Anspruch 11, dadurch gekennzeichnet, daß der mittige Träger (100) auf jeder seiner beiden Seiten wenigstens eine Hauptbelegung (110) und eine eine Referenzkapazität bildende Zusatzbelegung (120) aufweist, die mit einer Verbindungsbahn (122) verbunden ist, welche sich bis in den oberen Abschnitt der Sonde erstreckt.

13. Vorrichtung nach einem der Ansprüche 11 oder 12, dadurch gekennzeichnet, daß die auf den beiden Seiten des mittigen Trägers (100) vorgesehenen verschiedenen Belegungelemente (110, 120, 130, 140) jeweils paarweise und die beiden externen Elektrodenelemente (200) unter sich elektrisch verbunden sind.

14. Vorrichtung nach einem der Ansprüche 1 bis 13, dadurch gekennzeichnet, daß wenigstens einige der Belegungen von einem Träger aus elektrisch isolierendem Werkstoff getragen sind, der aus der Gruppe mit Polyimiden und glasgewebeverstärkten Epoxidharzen gewählt ist.

15. Vorrichtung nach einem der Ansprüche 1 bis 14, dadurch gekennzeichnet, daß die Belegungen nach subtraktivem Verfahren aus Kupfer hergestellt sind.

16. Vorrichtung nach einem der Ansprüche 1 bis 15, dadurch gekennzeichnet, daß der die beiden Hauptbelegungen (110, 210) trennende Abstand zwischen 0,8 und 1,2 mm beträgt.

17. Vorrichtung nach einem der Ansprüche 1 bis 16, dadurch gekennzeichnet, daß sie Einrichtungen zum Korrigieren der Information umfaßt, die aus einem an den Kapillareffekt gebundenen Wert gewonnen wird und durch folgende Beziehung definiert ist:

$$h = \frac{A}{d \; \rho \; g}$$

worin
A die Oberflächenspannung der Flüssigkeit,
d den die Belegungen trennenden Abstand,
$\rho$ die Dichte der Flüssigkeit und
g die Fallbeschleunigung darstellen.

18. Vorrichtung nach einem der Ansprüche 1 bis 17, dadurch gekennzeichnet, daß der die Belegungen (110, 210) trennende Abstand durch Abstandshalter (300) aus elektrisch isolierendem Werkstoff definiert ist, die außerhalb der aktiven Belegungbereiche angeordnet sind.

19. Vorrichtung nach einem der Ansprüche 1 bis 18, dadurch gekennzeichnet, daß die zweite Belegung (210) auf der Basis von verzinntem Eisen oder rostfreiem Stahl hergestellt ist.

20. Vorrichtung nach einem der Ansprüche 1 bis 19, dadurch gekennzeichnet, daß die Abstandshalter (300) auf der Basis eines Werkstoffs hergestellt sind, der aus der Gruppe mit Aluminiumoxid, Steatit und den Flüssigkristall-Polymeren gewählt ist.

21. Vorrichtung nach einem der Ansprüche 1 bis 20, dadurch gekennzeichnet, daß wenigstens einige der Belegungen durch eine Schicht elektrisch isolierenden Werkstoffs geschützt sind.

**22.** Vorrichtung nach Anspruch 21, dadurch gekennzeichnet, daß der elektrisch isolierende Werkstoff aus der Gruppe mit einem basischen Lack, einem Polyimid-Lack, einem Epoxid-Lack, einem Polymeren/Poly-p-xylol, einem glasgewebeverstärkten Epoxidharz gewählt ist.

**23.** Vorrichtung nach einem der Ansprüche 1 bis 22, dadurch gekennzeichnet, daß die Geometrie der Hauptbelegungen die Eichlinie des Behälters wiederholt.

**24.** Vorrichtung nach einem der Ansprüche 1 bis 23, dadurch gekennzeichnet, daß die Breite der Schutzbelegung (140) gleich 2d ist, worin d den die Belegungen trennenden Abstand darstellt.

**25.** Vorrichtung nach einem der Ansprüche 1 bis 24, dadurch gekennzeichnet, daß der die Schutzbelegung (140) von den Belegungen trennende Abstand kleiner als 1 mm ist und vorzugsweise ungefähr 0,4 mm beträgt.

**26.** Vorrichtung nach einem der Ansprüche 1 bis 25, dadurch gekennzeichnet, daß sie Einrichtungen zum Vergleichen der gemessenen Dielektrizitätskonstanten der Flüssigkeit mit einem Schwellenwert und Erzeugen eines Warnsignals bei Überschreiten des Schwellenwertes durch die gemessene Dielektrizitätskonstante umfaßt.

**27.** Vorrichtung nach einem der Ansprüche 1 bis 26, dadurch gekennzeichnet, daß sie Einrichtungen umfaßt, die einen Mittelwert der Dielektrizitätskonstanten zu speichern und diese mittlere Dielektrizitätskonstante bei Überschreiten eines Schwellenwertes durch die gemessene Dielektrizitätskonstante auszuwerten vermögen.

**28.** Vorrichtung nach einem der Ansprüche 1 bis 26, dadurch gekennzeichnet, daß sie Einrichtungen zum Vergleichen der gemessenen Dielektrizitätskonstante der Flüssigkeit mit einem Schwellenwert und Einrichtungen zum Speichern des letzten gewonnenen Wertes der gemessenen Dielektrizitätskonstante, solange diese den Schwellenwert nicht überschreitet.

**29.** Vorrichtung nach einem der Ansprüche 1 bis 28, dadurch gekennzeichnet, daß die Kapazitätsmeßeinrichtung einen von der kapazitiven Sonde beaufschlagten Oszillator (430) und eine auf die Frequenz des Oszillators (430) ansprechende Einrichtung (440) umfaßt.

**30.** Vorrichtung nach einem der Ansprüche 1 bis 29, dadurch gekennzeichnet, daß sie ein Multiplexer-Organ (420) zum sukzessiven Verbinden der verschiedenen Belegungen mit dem Oszillator (430) umfaßt.

**31.** Vorrichtung nach einem der Ansprüche 29 oder 30, dadurch gekennzeichnet, daß sie Einrichtungen umfaßt, die zum sukzessiven Beaufschlagen des Oszillators (430) in einer anfänglichen Eichphase durch Kondensatoren mit einer bekannten Kapazitätsdifferenz ausgelegt sind.

**32.** Vorrichtung nach einem der Ansprüche 1 bis 31, dadurch gekennzeichnet, daß
- die kapazitive Sonde in ihrem unteren Abschnitt Zusatzbelegungselemente (120, 210) aufweist, die eine die Bestimmung der Dielektrizitätskonstante der Flüssigkeit ermöglichende Referenzkapazität definieren,
- Einrichtungen vorgesehen sind zum Vergleichen der gemessenen Dielektrizitätskonstante der Flüssigkeit mit einem Schwellenwert, zum Erzeugen eines Warnsignals bei Überschreiten des Schwellenwertes durch die gemessene Dielektrizitätskonstante, und zum Durchführen der Niveau- und/oder Volumenmessung, ausgehend von einem vorgegebenen Wert der Dielektrizitätskonstanten, bei Überschreiten des Schwellenwertes durch die gemessene Dielektrizitätskonstante.

**33.** Vorrichtung nach einem der Ansprüche 1 bis 32, dadurch gekennzeichnet, daß die verschiedenen Belegungen (110, 210) eben und parallel sind.

**34.** Vorrichtung nach Anspruch 1, dadurch gekennzeichnet, daß die von der Schutzbelegung (140) umgebene erste Belegung (110) auf einer ersten Fläche eines ebenen Trägers aus elektrisch isolierendem Werkstoff angeordnet ist, und die zweite Fläche des Trägers von einer mit der Schutzbelegung verbundenen Elektrode bedeckt ist.

**35.** Vorrichtung nach einem der Ansprüche 1 bis 34, dadurch gekennzeichnet, daß das Flüssigkeitsniveau durch Berechnen eines Koeffizienten K folgendermaßen bestimmt wird:

K = eingetauchte Fläche der eingetauchten ersten Belegung (110)/Gesamtfläche der eingetauchten ersten Belegung (110)

= (Cgem - CLuft)/(Cimm - CLuft)

worin Cgem = die gemessene Kapazität zwischen den ersten und zweiten Elektroden (110 und 210) ist,

CLuft = die Kapazität für die erste Belegung (110) und die zweite Belegung (21) in der Luft ist,

Cimm = die Kapazität für die erste Belegung (110) und die zweite Belegung (210) bei vollständigem Eintauchen ist.

36. Vorrichtung nach Anspruch 35, dadurch gekennzeichnet, daß CLuft bei der Auslegung des Systems in Kenntnis der Fläche der Belegungen rechnerisch ermittelt und in einem Speicher gespeichert wird.

37. Vorrichtung nach Anspruch 35, dadurch gekennzeichnet, daß CLuft durch Speichern des Kapazitätswertes definiert ist, der zwischen der ersten und der zweiten Belegung (110, 210) vor dem Einfüllen der Flüssigkeit in den Behälter gemessen wurde.

38. Vorrichtung nach Anspruch 35, dadurch gekennzeichnet, daß CLuft durch eine diskrete Kapazität definiert ist.

39. Vorrichtung nach Anspruch 30, dadurch gekennzeichnet, daß zum selektiven Parallelschalten der nicht angewählten Eingänge des Multiplexer-Organs (420) Transistoren T460, T461, Z462 vorgesehen sind.

40. Vorrichtung nach einem der Ansprüche 1 bis 39, dadurch gekennzeichnet, daß die Niveau- und/oder Volumeninformation durch ein Anzeigegerät des Typs Quotientenmesser abgegeben Wird, das ein Steuersignal von veränderbarem zyklischen Verhältnis empfängt.

41. Vorrichtung nach Anspruch 40, dadurch gekennzeichnet, daß die Geometrie der ersten Belegung (110) so gestaltet ist, daß die Nichtlinearität der Übertragungskurve: zyklisches Verhältnis/Zeigerausschlag des Quotientenmessers korrigierbar ist.

42. Vorrichtung nach einem der Ansprüche 1 bis 41, dadurch gekennzeichnet, daß die kapazitive Sonde (S) mit einem Antischwall-Beruhigungsrohr verbunden ist, das mit dem Behälter durch wenigstens eine kalibrierte Bohrung verbunden ist.

43. Vorrichtung nach Anspruch 42, dadurch gekennzeichnet, daß das Beruhigungsrohr von den Elektroden der Sonde selbst gebildet ist.

44. Vorrichtung nach einem der Ansprüche 1 bis 43, dadurch gekennzeichnet, daß sie eine Zentraleinheit (440) aufweist, die zur Bestimmung der Flüssigkeitsart durch Vergleichen der gemessenen Dielektrizitätskonstante dieser Flüssigkeit mit vorbestimmten Werten ausgelegt ist.

45. Vorrichtung nach Anspruch 44, dadurch gekennzeichnet, daß sie außerdem Einrichtungen zur Messung der Flüssigkeitstemperatur und zur Korrektur des gemessenen Wertes für die Dielektrizitätskonstante abhängig von der gemessenen Temperatur aufweist.

**Claims**

1. Apparatus for measuring the level and/or the volume of a liquid contained in a tank, the apparatus comprising a capacitive probe including at least two separate, generally vertical, parallel main plates (110, 210) for immersion in the liquid, and electrical capacitance-measuring means (400) having a detection input and a ground, the detection input being connected to a first one of the main plates (110) and the ground being connected to a second one of the main plates (210), the apparatus being characterized by the fact that the first plate (110) is surrounded by a guard armature (140) and the apparatus includes a potential copying stage (410) having its input connected to the first plate (110) and its output connected to the guard armature (140), so that the guard armature (140) is placed to the same potential than the first plate (110).

2. Apparatus according to claim 1, characterized by the fact that the bottom of the capacitive probe includes auxiliary plate elements (120) which define a reference capacitance enabling the permittivity of the fluid to be determined.

3. Apparatus according to claim 2, characterized by the fact that one of the auxiliary plate elements (120) coincides with one of the main plates (210).

4. Apparatus according to claim 2 or 3, characterized by the fact that one of the auxiliary plate elements (120) is integral with the second main plate (210).

5. Apparatus according to claim 3 or 4, characterized by the fact that the other auxiliary plate element (120) is connected to a connection track (122) which extends to the top portion of the probe.

6. Apparatus according to claim 5, characterized by the fact that it includes secondary plate elements (130, 210) defining the capacitance having the same shape and the same relative position as the capacitance delimited by the connection track (122) and the second main plate (210).

7. Apparatus according to claim 6, characterized by the fact that one of the secondary plate elements (130, 210) coincides with the second main plate (210).

8. Apparatus according to claim 6 or 7, characterized by the fact that it includes means designed to subtract the capacitance determined by the secondary plate elements (130, 210) from the value of the capacitance determined by the auxiliary plate elements (120) and the association connection track (120, 122; 210).

9. Apparatus according to any one of claims 1 to 8, characterized by the fact that it comprises at least one support of electrically insulating material carrying the first main plate (110), an auxiliary plate (120) placed at the bottom of the support beneath the main plate (110), a connection track (122) connected to the auxiliary plate (120) and extending to the top portion, a secondary plate element (130) having the same shape as the connection track (122) and extending parallel thereto, and the guard armature (140) which surrounds the main plate (110), which surrounds the auxiliary plate (120) and its association connection track (122), and which surrounds the secondary plate element (130), the second plate (210) being supported parallel to the support by spacers (300) made of electrically insulating material, the second plate (210) extending over the main plate (110), the auxiliary plate (120) together with its connection track (122), and the secondary plate (130).

10. Apparatus according to any one of claims 1 to 5, characterized by the fact that the capacitive probe includes at least one support of electrically insulating material which carries the first main plate (110), an auxiliary plate (120) placed at the bottom of the support beneath the main plate (110), a connection track (122) connected to the auxiliary plate and extending to the top portion of the support, and the guard armature (140) which surrounds the main plate (110), and which surrounds the auxiliary plate (120) together with its associated connection track, the second plate (210) being supported parallel to the support by spacers (300) of electrically insulating material, and being shaped to extend over the main plate (110) and the auxiliary plate (120) but not to extend over the connection track (122).

11. Apparatus according to any one of claims 1 to 10, characterized by the fact that the capacitive probe comprises a central support (100) of electrically insulating material coated on each of its two faces with capacitor plates, together with two outer electrode elements (200) placed facing respective faces of the support and separated therefrom by spacers (300) made of electrically insulating material.

12. Apparatus according to claim 11, characterized by the fact that each of the two faces of the central support (100) carries at least one main plate (110) and an auxiliary plate (120) defining a reference capacitance which is connected to a connection track (122) extending to the top portion of the probe.

13. Apparatus according to claim 11 or 12, characterized by the fact that the various plate elements (110, 120, 130, 140) provided on the two faces of the central support (100) are electrically interconnected in respective pairs and the two outer electrode elements (200) are electrically interconnected.

14. Apparatus according to any one of claims 1 to 13, characterized by the fact that at least some of the plates are carried by a support made of an electrically insulating material selected from the group comprising: polyimides and glass fiber cloth impregnated with epoxy resin.

15. Apparatus according to any one of claims 1 to 14, characterized by the fact that the plates are made of copper by the subtractive method.

16. Apparatus according to any one of claims 1 to 15, characterized by the fact that the distance between the two main plates (110, 210) lies in the range 0.8 mm to 1.2 mm.

17. Apparatus according to any one of claims 1 to 16, characterized by the fact that it includes means designed to correct the information obtained by a value related to the capillarity effect and defined by the equation:

h = A/dog, in which:

A is the surface tension of the liquid;

$\underline{d}$ is the width of the gap between the plates;

$\rho$ is the density of the liquid; and

$\underline{q}$ is acceleration due to gravity.

18. Apparatus according to any one of claims 1 to 17, characterized by the fact that the distance between the plates (110, 210) is defined by spacers (300) of electrically insulating material placed outside the active zones of the plates.

19. Apparatus according to any one of claims 1 to 18, characterized by the fact that the second plate (210) is made of tin plate or stainless steel.

20. Apparatus according to any one of claims 1 to 19, characterized by the fact that the spacers are made of a material selected from the group comprising: alumina; steatite; and liquid crystal polymers.

21. Apparatus according to any one of claims 1 to 20, characterized by the fact that at least some of the plates are protected by a layer of electrically insulating material.

22. Apparatus according to claim 21, characterized by the fact that the electrically insulating material is selected from the group comprising: cationic varnish, polyimide varnish, epoxy varnish, a poly-p-xylene/polymer, glass fiber filled epoxy resin.

23. Apparatus according to any one of claims 1 to 22, characterized by the fact that the shape of the main plates reproduces a calibration curve for the tank.

24. Apparatus according to any one of claims 1 to 23, characterized by the fact that the width of the guard armature (140) is equal to 2d, where $\underline{d}$ is the width of the gap between the plates.

25. Apparatus according to any one of claims 1 to 24, characterized by the fact that the distance between the guard armature (140) and the plates is less than 1 mm and is preferably about 0,4 mm.

26. Apparatus according to any one of claims 1 to 25, characterized by the fact that it includes means designed to compare the measured permittivity of the liquid with a threshold, and to generate an alarm if the measured permittivity exceeds the threshold.

27. Apparatus according to any one of claims 1 to 26, characterized by the fact that it includes means suitable for storing a resin permittivity value and for using said mean permittivity value if the measured permittivity exceeds a threshold.

28. Apparatus according to any one of claims 1 to 26, characterized by the fact that it includes means designed to compare the measured permittivity of the liquid with a threshold, and means designed to store the most recent value obtained for the measured permittivity so long as the value does not exceed the threshold.

29. Apparatus according to any one of claims 1 to 28, characterized by the fact that the means for measuring capacitance include an oscillator (430) loaded by the capacitive probe, and means (440) responsive to the frequency of the oscillator (430).

30. Apparatus according to one of claims 1 to 29, characterized by the fact that it includes a multiplexer member (420) designed to connect the various plates successively to the oscillator (430).

31. Apparatus according to claim 29 or 30, characterized by the fact that it includes means designed to connect the oscillator (430) during an initial calibration stage successively to capacitors having a known capacitance difference.

32. Apparatus according to any one of claims 1 to 31, characterized by the facts that:

the bottom portion of the capacitive probe includes auxiliary plate elements (120, 210) defining a reference capacitance suitable for determining the permittivity of the liquid; and

means are provided which are designed to compare the measured permittivity of the liquid with a threshold, to generate an alarm if the measured permittivity exceeds the threshold, and to measure the level and/or the volume of the fluid on the basis of a predetermined value for the permittivity if the measured permittivity exceeds the threshold.

33. Apparatus according to any one of claims 1 to 32, characterized by the fact that the various plates (110, 210) are plane and parallel.

34. Apparatus according to claim 1, characterized by the fact that the first plate (110) surrounded by the guard armature (140) is placed on a first face of a plane support made of electrically insulating material, and the second face of the support is covered by an electrode which is connected to the guard armature.

35. Apparatus according to any one of claims 1 to 34, characterized by the fact that the level of the liquid is determined by calculating a coefficient K such that:

$K =$ the area of the first plate (110) in the liquid divided by the total area of the first plate (110), = (Cmes - Cair)/(Cimm - Cair), where:

Cmes = the measured capacitance between the first and second electrodes (110 and 210);

Cair = the capacitance of the first plate (110) and the second plate (210) in air; and

Cimm = the capacitance of the first plate (110) and the second plate (210) when they are totally immersed.

36. Apparatus according to claim 35, characterized by the fact that Cair is defined by calculation during design of the system, given the areas of the plates, and is stored in a memory.

37. Apparatus according to claim 35, characterized by the fact that Cair is defined by storing the capacitance measured between the first and second plates (110, 210) prior to liquid being placed in the tank.

38. Apparatus according to claim 35, characterized by the fact that Cair is defined by a discrete capacitor.

39. Apparatus according to claim 30, characterized by the fact that transistors (T460, T461, T462) are provided for selectively shunting the non-selected inputs of the multiplexing member (420).

40. Apparatus according to any one of claims 1 to 39, characterized by the fact that the signal representative of level and/or volume is delivered by a ratio-meter type instrument receiving a control signal having a variable mark-space ratio.

41. Apparatus according to claim 40, characterized by the fact that the shape of the first plate (110) is shaped to correct for non-linearities in the transfer curve between mark-space ratio and deflection of the ratio-meter pointer.

42. Apparatus according to any one of claims 1 to 41, characterized by the fact that the capacitive probe(s) is associated with an antiwave steadying tube connected to the tank by at least one calibrated bore.

43. Apparatus according to claim 42, characterized by the fact that the steadying tube is formed by the electrodes of the probe itself.

44. Apparatus according to any one of claims 1 to 43, characterized by the fact that it includes a central unit (440) designed to determine the nature of the liquid by comparing the measured value of the permittivity of the liquid with predetermined values.

45. Apparatus according to claim 44, characterized by the fact that it further includes for measuring the temperature of the liquid and for correcting the measured permittivity value as a function of the measured temperature.

EP 0 401 111 B1

FIG_3

FIG_2

FIG_1

20

EP 0 401 111 B1

FIG.5

FIG.4

21

FIG_6

FIG_7

EP 0 401 111 B1

FIG. 8

FIG. 9

FIG. 10

EP 0 401 111 B1

# FIG.11

INITIALISATION
MEMORISATION $\mathcal{E}$ MOYEN — 500

MESURE FREQUENCE
OSCILLATEUR CHARGE, PAR O PUIS C 426
ETALONNAGE DE L'OSCILLATEUR 430 — 502

MESURE CAPACITE CONNEXION 122 — 504

MESURE CAPACITE REFERENCE 120 — 506

SOUSTRAIRE CAPACITE CONNEXION
DE CAPACITE REFERENCE CALCUL
DE $\mathcal{E}$. — 508

NON — $\mathcal{E} >$ SEUIL — OUI — 510

ALARME EAU — 512

$\mathcal{E} = \mathcal{E}$ MOYEN — 514

MESURE CAPACITE PRINCIPALE — 516

CALCUL NIVEAU / VOLUME — 518

VISUALISATION — 520

24

FIG.12

EP 0 401 111 B1

FIG_13

AFFICHAGE LOGO

RAPPORT CYCLIQUE